# EUROPÄISCHE PATENTANMELDUNG

(11) **EP 4 509 936 A1**
(43) Veröffentlichungstag der Anmeldung: **19.02.2025**
(21) Anmeldenummer: 23191437.5
(22) Anmeldetag: 15.08.2023
(51) Int. Cl.: G05B 19/409, G05B 19/042, G05B 23/02, G05B 19/418

(54) **LEITSYSTEM FÜR EINE TECHNISCHE ANLAGE UND BETRIEBSVERFAHREN**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Vorgeschlagen wird ein Leitsystem (12) für eine technische Anlage, insbesondere Fertigungs- oder Prozessanlage, das wenigstens einen Operator Station Server (14) und wenigstens einen mit dem Operator Station Server (14) verbundenen Operator Station Client (13) umfasst, wobei der Operator Station Server (14) dazu ausgebildet ist, Visualisierungsinformationen an den Operator Station Client (13) zu übertragen, und wobei der Operator Station Client (13) dazu ausgebildet ist, mittels der Visualisierungsinformationen eine grafische Darbietung eines zeitlichen Verlaufs (2) einer einem technischen Objekt der technischen Anlage zugeordneten Messgröße des Leitsystems (12) innerhalb eines bestimmten, vergangenen Zeitraumes für einen Operator der technischen Anlage zu erzeugen.

Das Leitsystem (12) ist dadurch gekennzeichnet, dass es dazu ausgebildet ist, den Operator auf dem Operator Station Client (13) visuell auf Bedienhandlungen hinzuweisen, die innerhalb des bestimmten, vergangenen Zeitraumes von dem Operator oder einem weiteren Operator vorgenommen worden sind.

## Beschreibung

Die Erfindung betrifft ein Leitsystem für eine technische Anlage, insbesondere Fertigungs- oder Prozessanlage. Außerdem betrifft die Erfindung ein Verfahren zum Betreiben eines Leitsystems für eine technische Anlage.

Für die Bedienung und Beobachtung verfahrenstechnischer Anlagen werden symbolische Anlagenbilder erstellt, die die verfahrenstechnischen Zusammenhänge - insbesondere zwischen den Prozessobjekten - abstrahiert darstellen. Anlagenbilder setzen sich aus statischen Symbolen (z.B. Leitungen, Rechtecke, usw.), dynamisierten Symbolen (z.B. in Abhängigkeit von Prozesswerten Leitungen mit Farbumschlag, Rechtecke mit Füllständen, usw.), Blocksymbolen (zur dynamisierten Visualisierung verfahrenstechnischer Prozessobjekte), komplexen Controls (z.B. Trendanzeigen, Meldefolgeanzeigen, usw.) und Containern, um Inhalte aus unabhängigen und eigenständige Quellen visualisieren zu können (z.B. Webcams, Anlagenbilder modularer Anlagenteile (Package Units) zusammen. Zudem können die Anlagenbilder Applikationen wie Regleroptimierer oder KPI- Rechner umfassen.

Über die Anlagenbilder und die darin enthaltenen Symbole nehmen Operatoren ihre Bedieneingriffe, bzw. prozessführenden Handlungen vor, die vom Leitsystem erfasst und archiviert werden. Diese Aufzeichnungen können dann für ein Audit Trail verwendet werden, um die tatsächlichen oder auch versuchten Handlungen von Operatoren während eines bestimmten Zeitraums untersuchen und nachvollziehen zu können. Damit kann unter anderem im Schadensfall zur Aufdeckung vorsätzlicher, fahrlässiger und fehlerhafter Handlungen deren zeitliche Abfolge nachvollzogen werden.

Es ist bekannt, dass die Handlungen von Operatoren neben den eigentlichen Prozessdaten in einem Prozessdatenarchiv als sogenannte Bedienmeldungen / Operator Message (technisch als zustandloser Alarm) abgelegt werden, die im Bedarfsfall wieder ausgelesen werden können. Auch können die aufgezeichneten Bedienmeldungen durch die Operatoren selbst genutzt werden, um den Betrieb der verfahrenstechnischen Anlage besser koordinieren, effizienter und fehlerminimaler gestalten zu können.

Bedienmeldungen werden zur Laufzeit z.B. für folgende Operatorenhandlungen automatisch erzeugt (darin enthalten sind auch so genannte negative Bedienmeldungen, falls eine Eingabe des Operators nicht ausgeführt werden konnte - wie z.B. das Setzen eines Stellwertes):
- TagSet (Stellwert setzen)
- TagSetFailed (Stellwert setzen misslungen)
- AlarmAckBanner (Alarm quittieren im Alarmbanner)
- AlarmAckBannerFailed (für Alarm quittieren im Alarm Banner)
- AlarmAckPlantDisplay (Alarm quittieren aller alarmgebenden Prozessobjekte im Anlagenbild)
- AlarmAckePlantDisplayFailed (Alarm quittieren aller alarmgebenden Prozessobjekte im Anlagenbild misslungen)
- AlarmAckSequenceDisplay (Alarm quittieren in der Meldefolgeanzeige)
- AlarmAckSequenceDisplayFailed (Alarm quittieren aller alarmgebenden Prozessobjekte im Anlagenbild misslungen)
- AlarmShelve (Alarm unterdrücken (shelve) in der Meldefolgeanzeige)
- AlarmShelveFailed (Alarm unterdrücken (shelve) in der Meldefolgeanzeige misslungen)
- AlarmUnshelve (Alarm nicht mehr unterdrücken (unshelve) in der Meldefolgeanzeige)
- AlarmUnshelveFailed (Alarm nicht mehr unterdrücken (unshelve) in der Meldefolgeanzeige misslungen); usw.

Jede Bedienmeldung verfügt in der Regel über einen spezifischen Text mit Metainformationen, die beispielsweise folgende Informationen umfassen:
- Was wurde gemacht? - Z.B. "Stellwert von 5.0 auf 5.5 erhöht"
- Wer hat es gemacht? - Z.B. "Operator Z4"
- Wann wurde es gemacht? - Z.B. am Operator Station Client Y und über den Operator Station Server 3

Typischerweise sind Bedienmeldungen auf das Audit-Trail "getrimmt" und in der Regel nur über sogenannte Meldefolgeanzeigen einsehbar - die Auswirkung der prozessführenden Handlung auf den verfahrenstechnischen Prozess, bzw. die Korrelation zwischen prozessführender Handlung und verfahrenstechnischem Prozess, ist nur mit hohem Aufwand ermittelbar.

In der EP 3 876 046 A1 ist ein Leitsystem einer technischen Anlage offenbart, welches eine Anpassung einer durch einen Operator Station Client erfolgten Darbietung von Visualisierungsinformationen durch einen Operator zu einer Laufzeit der technischen Anlage ermöglicht.

Der Erfindung liegt die Aufgabe zugrunde, ein Leitsystem für eine technische Anlage anzugeben, welches die Effizienz und die Flexibilität einer Bedienung und Beobachtung der technischen Anlage erhöht.

Diese Aufgabe wird gelöst durch ein Leitsystem für eine technische Anlage mit den Merkmalen des Anspruchs 1. Außerdem wird die Aufgabe gelöst durch ein Verfahren zum Betreiben eines Leitsystems für eine technische Anlage gemäß Anspruch 11. Vorteilhafte Weiterbildungen ergeben sich aus den abhängigen Ansprüchen.

Ein erfindungsgemäßes Leitsystem für eine technische Anlage, insbesondere Fertigungs- oder Prozessanlage, umfasst wenigstens einen Operator Station Server und wenigstens einen mit dem Operator Station Server verbundenen Operator Station Client umfasst, wobei der Operator Station Server dazu ausgebildet ist, Visualisierungsinformationen an den Operator Station Client zu übertragen, und wobei der Operator Station Client dazu ausgebildet ist, mittels der Visualisierungsinformationen eine grafische Darbietung eines zeitlichen Verlaufs einer einem technischen Objekt der technischen Anlage zugeordneten Messgröße des Leitsystems innerhalb eines bestimmten, vergangenen Zeitraumes für einen Operator der technischen Anlage zu erzeugen.

Das erfindungsgemäße Leitsystem ist dadurch gekennzeichnet, dass es dazu ausgebildet ist, den Operator auf dem Operator Station Client visuell auf Bedienhandlungen hinzuweisen, die innerhalb des bestimmten, vergangenen Zeitraumes von dem Operator oder einem weiteren Operator vorgenommen worden sind.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Unter einem "Operator Station Server" wird vorliegend ein Server verstanden, der zentral Daten eines Bedien- und Beobachtungssystems sowie in der Regel Alarm- und Messwertarchive eines Prozessleitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener des technischen Systems verstanden. Der Operator interagiert mittels spezieller Benutzerschnittstellen mit dem technischen System bzw. dessen Leitsystem und steuert spezielle technische Funktionen des Systems. Hierzu kann der Operator das Bedien- und Beobachtungssystem des Leitsystems mit dem Operator Station Server und dem Operator Station Client nutzen.

Das erfindungsgemäße Leitsystem weist den Operator visuell darauf hin, wenn mit dem dargestellten zeitlichen Verlauf der einem technischen Objekt wie einer Pumpe, einem Motor oder einem Ofen zugeordneten Messgröße wie einer Temperatur, einem Druck oder einer Drehzahl eine Bedienhandlung in einen zeitlichen Zusammenhang zu bringen ist. Diese Bedienhandlung kann von dem Operator selbst, oder von einem weiteren Operator oder mehreren Operatoren vorgenommen worden sein. Wenn sich der zeitliche Verlauf beispielsweise auf einen Zeitraum von 1 Uhr bis 3 Uhr bezieht und in dem Zeitraum eine oder mehrere Bedienhandlungen vorgenommen wurden, stellt dies das Leitsystem dem Operator visuell dar. Dadurch kann der Operator unmittelbar und ohne aufwändiges Suchen in Archiven des Leitsystems erfassen, dass einer oder mehrere dieser Bedienhandlugen einen möglichen Einfluss auf den zeitlichen Verlauf genommen haben. Dadurch lässt sich die Effizienz des Bedienens und Beobachtens der technischen Anlage durch den Operator vereinfachen.

Das Leitsystem kann die visuelle Darbietung des Hinweises automatisch vornehmen. Hierfür kann es beispielsweise automatisch den betreffenden Zeitraum der dargestellten Messgröße in einem Archiv des Leitsystems nach möglichen erfolgten Bedienhandlungen durchsuchen und visuell darbieten.

Bevorzugt ist das Leitsystem dazu ausgebildet, die visuelle Darbietung des Hinweises auf die Bedienhandlungen auf dem Operator Station Client auf eine Anforderung des Operators hin vorzunehmen. Dadurch kann sich der Operator den Hinweis genau dann darbieten lassen, wenn es seinem Bedürfnis entspricht. Für die Anforderung des Operators kann das Leitsystem durch den Operator Station Client ein visuell dargebotenes Anwahlfeld bereitzustellen. Dieses befindet sich vorzugsweise in einer geringen visuellen Entfernung zu dem zeitlichen Verlauf der dem technischen Objekt der technischen Anlage zugeordneten Messgröße, damit der Operator das Anwahlfeld intuitiv und effizient finden kann.

Im Rahmen einer vorteilhaften Weiterbildung der Erfindung ist das Leitsystem dazu ausgebildet, den Operator durch eine Markierung der Zeitpunkte, an denen jeweils eine der Bedienhandlungen vorgenommen wurde, in dem zeitlichen Verlauf der dem technischen Objekt der technischen Anlage zugeordneten Messgröße des Leitsystems auf die Bedienhandlungen hinzuweisen. Der Operator erhält so direkt in dem Diagramm mit dem zeitlichen Verlauf einen Hinweis auf eine vorliegende Bedienhandlung und kann einen etwaigen Zusammenhang zwischen dem zeitlichen Verlauf und der Bedienhandlung unmittelbar und intuitiv identifizieren. Beispielsweise kann der Operator mögliche Sprünge oder Anstiegsänderungen des zeitlichen Verlaufs nach unten oder oben, die durch die Bedienhandlung verursacht wurden, direkt und effizient zeitlich und kausal lokalisieren.

Die Markierung kann bevorzugt als eine vertikal verlaufende Linie ausgebildet sein, welche in dem zeitlichen Verlauf dargestellt wird und die zeitliche Einordnung der Bedienhandlung erleichtern kann. Besonders bevorzugt weist die vertikal verlaufende Linie eine Farbgebung auf, die sich von einer Farbgebung des zeitlichen Verlaufs der dem technischen Objekt der technischen Anlage zugeordneten Messgröße des Leitsystems unterscheidet. Hierdurch erkennt der Operator intuitiv und effizient, dass eine Markierung vorliegt, die auf eine Bedienhandlung hinweist. Die Farbgebung eine rote Farbgebung sein, wobei die rote Farbe die Aufmerksamkeit des Operators gezielt auf die Markierung leiten kann.

Im Rahmen einer weiteren bevorzugten Weiterbildung der Erfindung ist das Leitsystem dazu ausgebildet, die visuelle Darbietung des Hinweises auf die Bedienhandlungen in Form einer Meldefolgeanzeige vorzunehmen, wobei die Meldefolgeanzeige Bedienmeldungen umfasst, die jeweils eine Bedienhandlung betreffen. Die Bedienmeldungen können dabei jeweils wenigstens die vorgenommene Bedienhandlung, einen Zeitpunkt der Bedienhandlung und eine Identität des Operators, der die Bedienhandlung vorgenommen hat, umfassen. Dadurch erhält der Operator weitere, detaillierte Informationen zu der Bedienhandlung.

Die visuelle Darbietung der Meldefolgeanzeige kann alternativ oder zusätzlich zu der Markierung des Bedienhandlungszeitpunktes in dem zeitlichen Verlauf erfolgen. Das Leitsystem kann auch dazu ausgebildet sein, bei einer Anwahl der Markierung in dem zeitlichen Verlauf durch den Operator die entsprechende Meldefolgeanzeige mit der betreffenden Bedienhandlung visuell darzubieten.

Die visuelle Darbietung des Hinweises auf die Bedienhandlungen kann sich auf beliebige Bedienhandlungen beziehen. Diese müssen in keinem direkten Zusammenhang mit dem technischen Objekt stehen. Ist beispielsweise die Messgröße Druck einem Reaktor als technischem Objekt zugeordnet, kann auch die Bedienhandlung "Ventil öffnen", die sich auf ein Ventil als ein weiteres technisches Objekt bezieht, relevant für den Reaktor sein, wenn dieser mit dem Ventil in Wirkverbindung steht. Daher kann diese Bedienhandlung auch für den Operator von Interesse sein.

Das Leitsystem kann aber, ggf. nach Wahl des Operators, auch dazu ausgebildet sein, nur bezüglich dem technischen Objekt die visuelle Darbietung des Hinweises vorzunehmen, zu welchem die Messgröße, auf die sich der grafisch dargebotene zeitliche Verlauf bezieht, zugeordnet ist. Ist beispielsweise die Messgröße Temperatur einem Ofen als technischem Objekt zugeordnet, würde das Leitsystem nur eine Bedienhandlung anzeigen, die sich auf den Ofen bezieht ("z.B. Abluftmenge erhöht").

Bevorzugt ist das Leitsystem dazu ausgebildet, die grafische Darbietung des zeitlichen Verlaufs der dem technischen Objekt der technischen Anlage zugeordneten Messgröße aufgrund einer Anwahl einer Bedienmeldung in einer Meldefolgeanzeige durch den Operator vorzunehmen, wobei sich eine Bedienhandlung der Bedienmeldung auf das dem zeitlichen Verlauf zugeordnete technische Objekt bezieht. Der Operator kann sich mit anderen Worten aus der Meldefolgeanzeige heraus durch eine Anwahl einer Bedienmeldung direkt den zu dem die Bedienhandlung bzw. Bedienmeldung betreffenden technischen Objekt gehörigen zeitlichen Verlauf (mit der darin markierten Bedienhandlung) anzeigen lassen.

Die zuvor formulierte Aufgabe wird zudem gelöst durch ein Verfahren zum Betreiben eines Leitsystems für eine technische Anlage, insbesondere Fertigungsanlage oder Prozessanlage, das wenigstens einen Operator Station Server und wenigstens einen mit dem Operator Station Server verbundenen Operator Station Client umfasst, umfassend:
a) Übertragen von Visualisierungsinformationen durch den Operator Station Server an den Operator Station Client,
b) Erzeugen einer grafischen Darbietung eines zeitlichen Verlaufs einer einem technischen Objekt der technischen Anlage zugeordneten Messgröße des Leitsystems innerhalb eines bestimmten, vergangenen Zeitraumes für einen Operator der technischen Anlage mittels der Visualisierungsinformationen und durch den Operator Station Client,
c) Visuelles Hinweisen des Operators auf Bedienhandlungen durch den Operator Station Client, wobei die Bedienhandlungen innerhalb des bestimmten, vergangenen Zeitraumes von dem Operator oder einem weiteren Operator vorgenommen worden sind.

Bevorzugt nimmt der Operator Station Client die visuelle Darbietung des Hinweises auf die Bedienhandlungen auf eine Anforderung des Operators hin vor, wobei für die Anforderung des Operators vorzugsweise ein durch den Operator Station Client visuell dargebotenes Anwahlfeld bereitgestellt wird, höchst vorzugsweise in einer geringen visuellen Entfernung zu dem zeitlichen Verlauf der dem technischen Objekt der technischen Anlage zugeordneten Messgröße.

Besonders bevorzugt weist der Operator Station Client den Operator durch eine Markierung der Zeitpunkte, an denen jeweils eine der Bedienhandlungen vorgenommen wurde, in dem zeitlichen Verlauf der dem technischen Objekt der technischen Anlage zugeordneten Messgröße des Leitsystems auf die Bedienhandlungen hin.

Im Rahmen einer vorteilhaften Weiterbildung der Erfindung nimmt der Operator Station Client die visuelle Darbietung des Hinweises auf die Bedienhandlungen in Form einer Meldefolgeanzeige vor, wobei die Meldefolgeanzeige Bedienmeldungen umfasst, die jeweils eine Bedienhandlung betreffen.

Der Operator Station Client kann die grafische Darbietung des zeitlichen Verlaufs der dem technischen Objekt der technischen Anlage zugeordneten Messgröße aufgrund einer Anwahl einer Bedienmeldung in einer Meldefolgeanzeige durch den Operator vornehmen, wobei sich eine Bedienhandlung der Bedienmeldung auf das dem zeitlichen Verlauf zugeordnete technische Objekt bezieht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine visuelle Darbietung eines zeitlichen Verlaufs einer einem technischen Objekt einer technischen Anlage zugeordneten Messgröße durch einen Operator Station Client;
- FIG 2: die visuelle Darbietung des zeitlichen Verlaufs aus FIG 1 zusammen mit einer visuellen Darbietung einer Meldefolgeanzeige durch einen Operator Station Client gemäß einem ersten Aspekt;
- FIG 3: die visuelle Darbietung des zeitlichen Verlaufs aus FIG 1 zusammen mit einer visuellen Darbietung einer Meldefolgeanzeige durch einen Operator Station Client gemäß einem zweiten Aspekt; und
- FIG 4: ein erfindungsgemäßes Leitsystem in einer schematischen Darstellung.

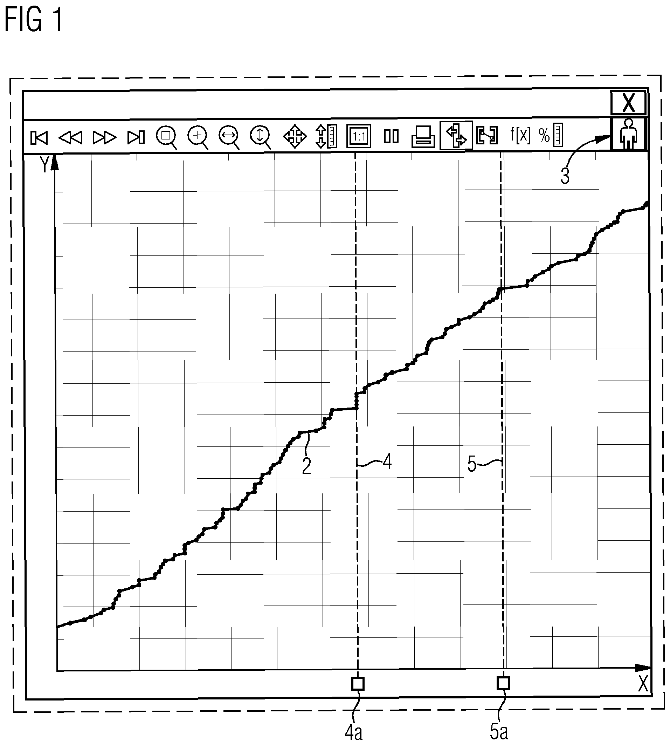

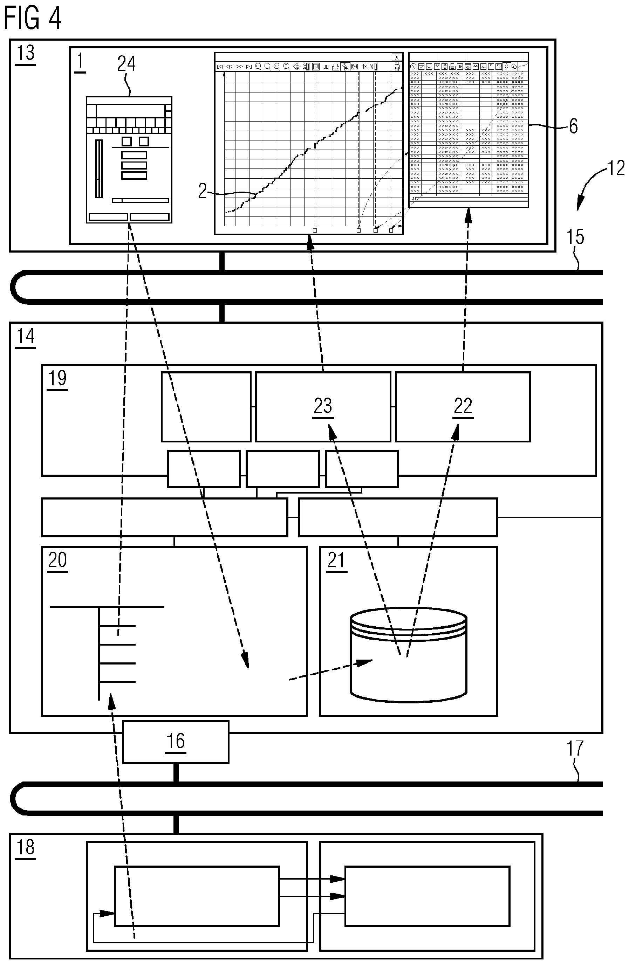

In FIG 1 ist eine grafische Wiedergabe 1 eines Operator Station Clients eines Leitsystems für eine technische Anlage dargestellt. Für die technischen Details der Struktur des Leitsystems sei auf die Beschreibung der FIG 4 verwiesen.

Die grafische Wiedergabe 1 umfasst einen zeitlichen Verlauf 2 einer einem technischen Objekt der technischen Anlage zugeordneten Messgröße. Die horizontal angeordnete X-Achse gibt dabei einen Zeitpunkt innerhalb eines bestimmten Zeitraumes, die vertikal angeordnete Y-Achse einen Wert wieder.

Im rechten, oberen Bereich der grafischen Wiedergabe 1 ist ein Anwahlfeld 3 angeordnet, welches symbolisch durch eine Person ausgedrückt ist. Wenn der Operator das Anwahlfeld 3 durch einen Mausklick betätigt, werden in der grafischen Wiedergabe 1 Markierungen angezeigt. In FIG 1 sind eine erste Markierung 4 und eine zweite Markierung 5 in Form von vertikal angeordneten, mit roter Farbgebung versehenen Linien dargestellt. Die erste Markierung 4 zeigt an, dass zu einem ersten Zeitpunkt 4a eine Bedienhandlung innerhalb des Leitsystems vorgenommen wurde. Diese Bedienhandlung kann, muss sich aber nicht direkt auf das technische Objekt beziehen, welches dem in FIG 1 dargestellten zeitlichen Verlauf 2 zugrunde liegt. Die zweite Markierung 5 zeigt entsprechend an, dass zu einem zweiten Zeitpunkt 5a eine weitere Bedienhandlung innerhalb des Leitsystems vorgenommen wurde. Der Operator kann durch die vertikalen Linienmarkierungen 4, 5 unmittelbar erkennen, wann Bedienhandlungen vorgenommen wurden und welchen Einfluss diese auf den zeitlichen Verlauf 2 genommen haben. Zu beiden Zeitpunkten 4a, 5a ist in FIG 1 zu erkennen, dass der zeitliche Verlauf 2 einen kleinen Sprung nach oben macht.

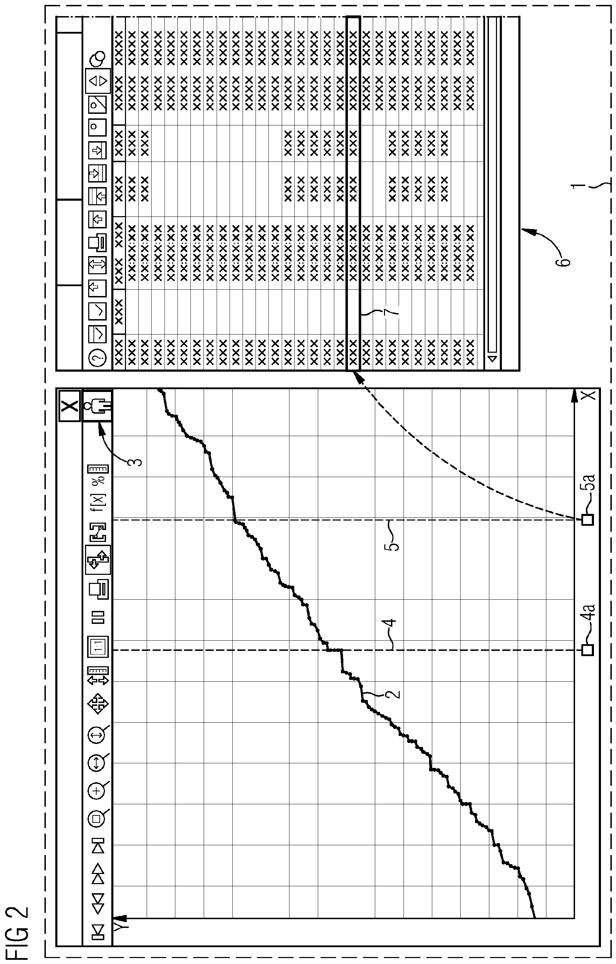

Wenn der Operator die zweite Markierungslinie 5 (per Mausklick oder mit einem Finger im Falle eines berührungsempfindlichen Bildschirms) anwählt, wird automatisch eine Meldefolgeanzeige 6 visuell durch den Operator Station Client in der grafischen Widergabe 1 dargestellt, was in FIG 2 zu erkennen ist. Die Meldefolgenanzeige 6 umfasst eine Vielzahl von untereinander angeordneten, beispielsweise nach einem Entstehungszeitpunkt geordneten Bedienmeldungen. Die Bedienmeldungen umfassen unter anderem Informationen über die vorgenommene Bedienhandlung, den Zeitpunkt der Bedienhandlung und eine Identität des Operators, welcher die Bedienhandlung vorgenommen hat.

Bei der Anwahl der zweiten Markierungslinie 5 wird ein entsprechender Abschnitt der Meldefolgeanzeige 6 ausgewählt, welcher die zu der zweiten Bedienhandlung gehörige Bedienmeldung 7 umfasst. Dadurch erhält der Operator zielgerichtet weitere Informationen zu der Bedienhandlung, um eine tiefergehende Evaluierung vornehmen zu können.

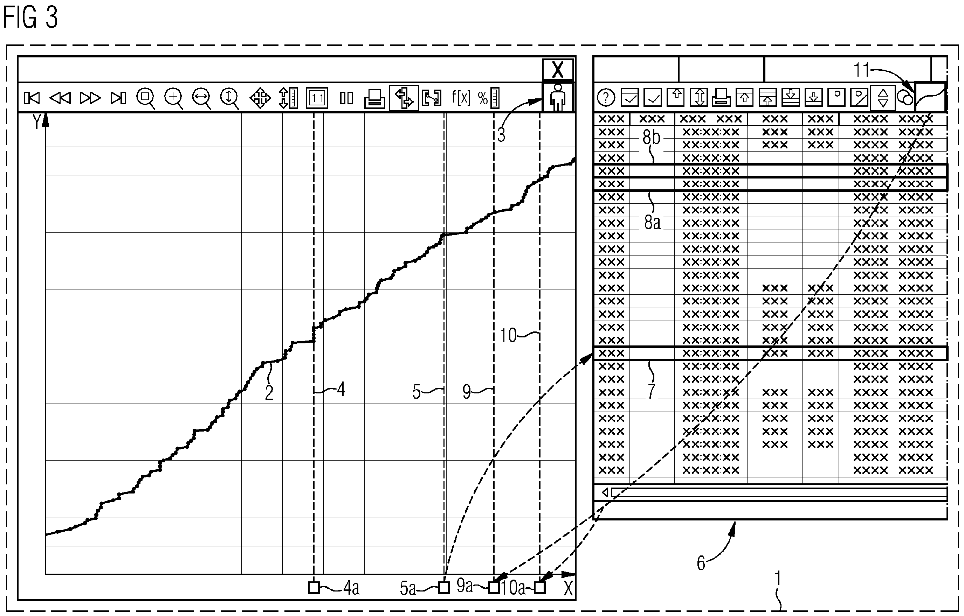

Der zeitliche Verlauf 2 Trendkurve kann nicht nur durch Bedienhandlungen beeinflusst werden, die das zugrundeliegende technische Objekt betreffen, sondern auch von Bedienhandlungen, die an anderen technischen Objekten vorgenommen werden. Die Bedienhandlungen können beim vorliegend erläuterten Ausführungsbeispiel beliebige technische Objekte betreffen. Für eine Assoziierung dieser Bedienhandlungen mit dem zeitlichen Verlauf 2 kann der Operator die anhand FIG 3 erläuterten Schritt durchführen. Zunächst wählt er zwei beliebige Bedienmeldungen 8a, 8b in der Meldefolgeanzeige 6 aus und überträgt diese (beispielsweise durch "Drag&Drop" oder per Anwahl eines entsprechenden Feldes 11) in den zeitlichen Verlauf 2.

In dem zeitlichen Verlauf 2 werden nun zusätzlich zwei Markierungen 9, 10 in Form von roten vertikalen Linien zu zwei weiteren Zeitpunkten 9a, 10a dargestellt. Der Operator kann nun überprüfen, ob die an anderen technischen Objekten einen Einfluss auf den zeitlichen Verlauf 2 (und damit beispielsweise auf einen verfahrenstechnischen Prozess) hatten.

In FIG 4 ist ein Leitsystem 12 für die Bedienung und Beobachtung einer als Prozessanlage ausgebildeten technischen Anlage schematisch dargestellt. Das Leitsystem 12 umfasst einen Operator Station Client 13 und einen Operator Station Server 14. Der Operator Station Server 14 und der Operator Station Client 13 sind über einen Terminalbus 15 miteinander und optional mit nicht dargestellten weiteren Komponenten des Leitsystems 12 wie einem Archivserver verbunden.

Ein Benutzer bzw. Operator kann zum Zwecke des Bedienens und Beobachtens über den Operator Station Client 13 mittels des Terminalbus 15 auf den Operator Station Server 14 zugreifen. Der Terminalbus 15 kann, ohne sich darauf zu beschränken, beispielsweise als Industrial Ethernet ausgebildet sein.

Der Operator Station Server 14 weist eine Geräteschnittstelle 16 auf, die mit einem Anlagenbus 17 verbunden ist. Über diese Geräteschnittstelle 16 kann der Operator Station Server 14 mit einem Automatisierungsgerät 18 sowie mit optional vorhandenen weiteren Komponenten der technischen Anlage wie Peripheriegeräten kommunizieren. Der Anlagenbus 17 kann, ohne sich darauf zu beschränken, beispielsweise als Industrial Ethernet ausgebildet sein.

Auf dem Operator Station Server 14 sind (unter anderem) ein Visualisierungsdienst 19, ein Anlagenabbild 20 (beispielsweise ein Prozessabbild 20) und ein lokaler Archivspeicher 21 implementiert. Der in dem Operator Station Server 14 integrierte Visualisierungsdienst 19 initiiert eine Übertragung von Visualisierungsinformationen an den Operator Station Client 13. Der Operator Station Client 3 ist dazu ausgebildet, eine Visualisierung, d.h. eine grafische Darbietung, insbesondere von Anlagenbildern, zum Bedienen und Beobachten der Prozessanlage darzustellen.

In dem Anlagenabbild 20 des Operator Station Servers 14 ist eine Momentaufnahme der (Signal-)Zustände von mit dem Operator Station Server 14 verbundenen Geräten und/oder Applikationen hinterlegt. Ein Meldedienst 22 kann Meldungen wie Bedienmeldungen aus dem Anlagenabbild 20 und dem Archivspeicher 21 auslesen und beispielsweise eine grafische Aggregation der Bedienmeldungen in der Meldefolgeanzeige 6 erzeugen, die der Operator Station Client 13 darstellen kann. Ein Anzeigedienst 23 des Visualisierungsdienstes 19 liest Werteverläufe von Messgrößen aus dem lokalen Archivspeicher 21 des Operator Station Servers 14 aus und erzeugt hieraus beispielsweise Visualisierungsinformationen für den in den Figuren 1 bis 3 dargestellten zeitlichen Verlauf 2.

Der Operator Station Client 13 stellt weiterhin ein Bedienelement 24 visuell dar, welches aktuelle Messwerte aus dem Anlagenabbild 20 ausliest und grafisch darstellt. Über das Bedienelement 24 kann der Operator die Wiedergabe des zeitlichen Verlaufs 2 initiieren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (12) für eine technische Anlage, insbesondere Fertigungs- oder Prozessanlage, das wenigstens einen Operator Station Server (14) und wenigstens einen mit dem Operator Station Server (14) verbundenen Operator Station Client (13) umfasst, wobei der Operator Station Server (14) dazu ausgebildet ist, Visualisierungsinformationen an den Operator Station Client (13) zu übertragen, und wobei der Operator Station Client (13) dazu ausgebildet ist, mittels der Visualisierungsinformationen eine grafische Darbietung eines zeitlichen Verlaufs (2) einer einem technischen Objekt der technischen Anlage zugeordneten Messgröße des Leitsystems (12) innerhalb eines bestimmten, vergangenen Zeitraumes für einen Operator der technischen Anlage zu erzeugen,
**dadurch gekennzeichnet, dass**
das Leitsystem (12) dazu ausgebildet ist, den Operator auf dem Operator Station Client (13) visuell auf Bedienhandlungen hinzuweisen, die innerhalb des bestimmten, vergangenen Zeitraumes von dem Operator oder einem weiteren Operator vorgenommen worden sind.

2. Leitsystem (12) nach Anspruch 1, das dazu ausgebildet ist, die visuelle Darbietung des Hinweises auf die Bedienhandlungen auf dem Operator Station Client (13) auf eine Anforderung des Operators hin vorzunehmen.

3. Leitsystem (12) nach Anspruch 2, das dazu ausgebildet ist, für die Anforderung des Operators ein durch den Operator Station Client (13) visuell dargebotenes Anwahlfeld (3) bereitzustellen, vorzugsweise in einer geringen visuellen Entfernung zu dem zeitlichen Verlauf (2) der dem technischen Objekt der technischen Anlage zugeordneten Messgröße.

4. Leitsystem (12) nach einem der vorangegangenen Ansprüche, das dazu ausgebildet ist, den Operator durch eine Markierung der Zeitpunkte (4a, 5a, 9a, 10a), an denen jeweils eine der Bedienhandlungen vorgenommen wurde, in dem zeitlichen Verlauf (2) der dem technischen Objekt der technischen Anlage zugeordneten Messgröße des Leitsystems (12) auf die Bedienhandlungen hinzuweisen.

5. Leitsystem (12) nach Anspruch 4, bei dem die Markierung als eine vertikal verlaufende Linie (4, 5, 9, 10) ausgebildet ist.

6. Leitsystem (12) nach Anspruch 5, bei dem die vertikal verlaufende Linie (4, 5, 9, 10) eine Farbgebung, vorzugsweise eine rote Farbgebung, aufweist, die sich von einer Farbgebung des zeitlichen Verlaufs (2) der dem technischen Objekt der technischen Anlage zugeordneten Messgröße des Leitsystems (12) unterscheidet.

7. Leitsystem (12) nach einem der vorangegangenen Ansprüche, das dazu ausgebildet ist, die visuelle Darbietung des Hinweises auf die Bedienhandlungen in Form einer Meldefolgeanzeige (6) vorzunehmen, wobei die Meldefolgeanzeige (6) Bedienmeldungen (7, 8a, 8b) umfasst, die jeweils eine Bedienhandlung betreffen.

8. Leitsystem (12) nach Anspruch 7, bei dem die Bedienmeldungen (7, 8a, 8b) jeweils die vorgenommene Bedienhandlung, einen Zeitpunkt der Bedienhandlung und eine Identität des Operators, der die Bedienhandlung vorgenommen hat, umfassen.

9. Leitsystem (12) nach einem der vorangegangen Ansprüche, das dazu ausgebildet ist, die visuelle Darbietung des Hinweises auf die Bedienhandlungen nur bezüglich dem technischen Objekt vorzunehmen, zu welchem die Messgröße, auf die sich der grafisch dargebotene zeitliche Verlauf (2) bezieht, zugeordnet ist.

10. Leitsystem (12) nach einem der vorangegangenen Ansprüche, das dazu ausgebildet ist, die grafische Darbietung des zeitlichen Verlaufs (2) der dem technischen Objekt der technischen Anlage zugeordneten Messgröße aufgrund einer Anwahl einer Bedienmeldung (7, 8a, 8b) in einer Meldefolgeanzeige (6) durch den Operator vorzunehmen, wobei sich eine Bedienhandlung der Bedienmeldung (7, 8a, 8b) auf das dem zeitlichen Verlauf (2) zugeordnete technische Objekt bezieht.

11. Verfahren zum Betreiben eines Leitsystems (12) für eine technische Anlage, insbesondere Fertigungsanlage oder Prozessanlage, das wenigstens einen Operator Station Server (14) und wenigstens einen mit dem Operator Station Server (14) verbundenen Operator Station Client (13) umfasst, umfassend:
a) Übertragen von Visualisierungsinformationen durch den Operator Station Server (14) an den Operator Station Client (13),
b) Erzeugen einer grafischen Darbietung eines zeitlichen Verlaufs (2) einer einem technischen Objekt der technischen Anlage zugeordneten Messgröße des Leitsystems (12) innerhalb eines bestimmten, vergangenen Zeitraumes für einen Operator der technischen Anlage mittels der Visualisierungsinformationen und durch den Operator Station Client (13),
c) Visuelles Hinweisen des Operators auf Bedienhandlungen durch den Operator Station Client (13), wobei die Bedienhandlungen innerhalb des bestimmten, vergangenen Zeitraumes von dem Operator oder einem weiteren Operator vorgenommen worden sind.

12. Verfahren nach Anspruch 11, bei dem der Operator Station Client (13) die visuelle Darbietung des Hinweises auf die Bedienhandlungen auf eine Anforderung des Operators hin vornimmt, wobei für die Anforderung des Operators vorzugsweise ein durch den Operator Station Client (13) visuell dargebotenes Anwahlfeld (3) bereitgestellt wird, höchst vorzugsweise in einer geringen visuellen Entfernung zu dem zeitlichen Verlauf (2) der dem technischen Objekt der technischen Anlage zugeordneten Messgröße.

13. Verfahren nach Anspruch 11 oder 12, bei dem der Operator Station Client (13) den Operator durch eine Markierung der Zeitpunkte (4a, 5a, 9a, 10a), an denen jeweils eine der Bedienhandlungen vorgenommen wurde, in dem zeitlichen Verlauf (2) der dem technischen Objekt der technischen Anlage zugeordneten Messgröße des Leitsystems (12) auf die Bedienhandlungen hinweist.

14. Verfahren nach einem der Ansprüche 11 bis 13, bei dem der Operator Station Client (13) die visuelle Darbietung des Hinweises auf die Bedienhandlungen in Form einer Meldefolgeanzeige (6) vornimmt, wobei die Meldefolgeanzeige (6) Bedienmeldungen (7, 8a, 8b) umfasst, die jeweils eine Bedienhandlung betreffen.

15. Verfahren nach einem der Ansprüche 11 bis 14, bei dem der Operator Station Client (13) die grafische Darbietung des zeitlichen Verlaufs (2) der dem technischen Objekt der technischen Anlage zugeordneten Messgröße aufgrund einer Anwahl einer Bedienmeldung (7, 8a, 8b) in einer Meldefolgeanzeige (6) durch den Operator vornimmt, wobei sich eine Bedienhandlung der Bedienmeldung (7, 8a, 8b) auf das dem zeitlichen Verlauf (2) zugeordnete technische Objekt bezieht.
